# EUROPÄISCHE PATENTSCHRIFT

(11) **EP 3 448 703 B1**
(45) Veröffentlichungstag und Bekanntmachung des Hinweises auf die Patenterteilung: **19.02.2020**
(21) Anmeldenummer: 18729084.6
(22) Anmeldetag: 30.05.2018
(51) Int. Cl.: B60K 1/02, B60K 1/00, B60K 1/04, B60K 7/00

(54) **ELEKTROAUTO**
ELECTRIC VEHICLE
VÉHICULE ÉLECTRIQUE

(30) Priorität: 30.05.2017 DE 102017111801; 26.06.2017 EP 17177846
(43) Veröffentlichungstag der Anmeldung: 06.03.2019
(73) Patentinhaber: FLET GmbH, 38118 Braunschweig (DE)
(72) Erfinder: MEYER, Wolfgang, 38116 Braunschweig (DE); GROTE, Jochen, 38104 Braunschweig (DE)
(74) Vertreter: Gramm, Lins & Partner Patent- und Rechtsanwälte PartGmbB
(86) Internationale Anmeldenummer: PCT/EP2018/064243
(87) Internationale Veröffentlichungsnummer: WO 2018/220046

(56) Entgegenhaltungen:
- WO-A1-2013/106049
- CN-Y- 201 054 531
- DE-A1-102011 053 254
- US-A1- 2011 259 657
- US-A1- 2015 155 801
- US-A1- 2015 165 900

## Beschreibung

Die Erfindung betrifft ein Elektroauto gemäß dem Oberbegriff von Anspruch 1.

Elektrofahrzeuge werden seit geraumer Zeit hergestellt und erleben eine Renaissance. Im Vergleich zu Fahrzeugen mit Verbrennungsmotor ist ihr Anteil bisher jedoch gering. Auch wenn die Herstellung von Elektrofahrzeugen sich grundsätzlich einfacher und kostengünstiger gestaltet, als die Herstellung von Verbrennungsmotorfahrzeugen, so werden bisher für die unterschiedlichen Leistungsklassen in den Außenabmessungen unterschiedlich große Elektromotoren eingesetzt.

Aus der WO 2013/106 049 A1 ist ein Elektrofahrzeug bekannt, bei dem ein Elektromotor aus Batterien mit Strom versorgt wird, die entlang des Mitteltunnels angeordnet sind und dessen Elektromotoren nicht zwischen den Radachsen sondern vor der Vorderachse und hinter Hinterachse angeordnet sind. Ein derartiges Elektroauto ist hinsichtlich seines Antriebs kaum modularisierbar.

Aus der US 2011/0 259 657 A1 ist ein Elektroauto bekannt, bei dem die Elektromotoren in einer Vielzahl von Konfigurationen angeordnet sein können. Auch ein derartiges Elektrofahrzeug ist hinsichtlich seines Antriebs nur schlecht modularisierbar.

Im US 2015/0155801 A1 ist ein Elektrofahrzeug in der Form eines Elektrobusses beschrieben, in welchem zwei oder mehrere axial gekoppelte Elektromotoren in Innenläufer-Bauart Verwendung finden. Auch besitzt die dort verwendete Batterie mit einer 2,3-fach höheren Bauhöhe nicht die gleiche Bauhöhe wie der Elektromotor.

Die DE 10 2011 053 254 A1 beschreibt ein Baukastensystem für ein modular aufgebautes Elektrofahrzeug, bei dem die Batterie erneut entlang des Mitteltunnels verläuft. Die Drehachsen der Elektromotoren verlaufen quer zur Längsachse des Fahrzeugs. Bei einem derartigen Elektrofahrzeug sind der Modularisierung des Elektromotorantriebs enge Grenzen gesetzt.

Aus der US 2015/0 165 900 A1 ist ein Elektrofahrzeug bekannt, bei dem ein einzelner Elektromotor zentral zwischen den Achsen angeordnet ist. Die Batterien sind im Bereich hinter der Hinterachse angeordnet. Auch ein solches Fahrzeug ist nicht modularisierbar.

Die Anforderungen an ein Elektrofahrzeug sind, dass es hinsichtlich seines Antriebs möglichst modularisierbar ist, damit mehrere Motorisierungen mit geringem Aufwand angeboten werden können. Zudem müssen die Elektromotoren bei möglichst kompakten Außenabmessungen besonders drehmomentstark sein. Bislang ist es nicht gelungen, diese Anforderungen umzusetzen.

Der Erfindung liegt die Aufgabe zugrunde, ein verbessertes Elektrofahrzeug vorzuschlagen.

Die Erfindung löst das Problem durch ein Elektroauto mit den Merkmalen von Anspruch 1.

Vorteilhaft an diesem Elektroauto ist, dass der Elektromotor und die Batterie auf gleicher Höhe angeordnet sind und dazu führt, dass die Bauhöhe, die für den Elektromotor und die Batterie vorgesehen werden muss, klein gewählt werden kann. Besonders günstig ist es, wenn, was ebenfalls eine bevorzugte Ausführungsform darstellt, sowohl die Batterien als auch der Elektromotor unterhalb eines Niveaus angeordnet ist, auf dem der Fahrersitz sich befindet. In anderen Worten sind Motor und Batterie dann vollständig unter dem Fahrersitz angeordnet. Das führt dazu, dass der Schwerpunkt des Elektroautos so tief liegt, dass sich eine gute Straßenlage ergibt.

Besonders vorteilhaft ist, dass diese Anpassung der Bauhöhen eine Modularisierung von Batterien und Elektromotor ermöglicht. Das wiederum gestattet es, die Herstellung von verschiedenen Modellen mit unterschiedlichen Antriebsleistungen rationell zu planen und zu fertigen.

Vorzugsweise hat das Elektroauto vier Räder.

Unter der Achse wird das Bauteil verstanden, an dem die Räder befestigt sind. Die mathematische Achse, um die die Räder rotieren, wird als Drehachse bezeichnet.

Die Elektromotor-Bauhöhe wird insbesondere berechnet anhand desjenigen gedachten Quaders minimalen Volumens, der 90% der Masse des Elektromotors enthält. In anderen Worten ist es möglich, dass kleinere Bereiche des Elektromotors auskragen oder Vorsprünge ausbilden, wenngleich dies oft nicht vorteilhaft ist.

Die Batterie-Bauhöhe wird auf die gleiche Weise berechnet.

Unter dem Merkmal, dass der Elektromotor und die Batterie auf gleicher Höhe angeordnet sind, wird insbesondere verstanden, dass ein vertikaler Abstand des Batterie-Massenschwerpunkts vom Elektromotor-Massenschwerpunkt höchstens ein Viertel, insbesondere höchstens ein Fünftel, der Bauhöhe des Elektromotors beträgt.

Unter einer Batterie wird eine Zusammenschaltung mehrerer galvanischer Zellen verstanden. Insbesondere umfasst die Batterie galvanische Lithium-Zellen. Alternativ oder zusätzlich kann die Batterie zumindest eine Flussbatterie oder zumindest ein Flussbatterie-Modul umfassen, beispielsweise eine Vanadium-Flussbatterie.

Günstig ist es, wenn der Elektromotor die Räder einer Achse über ein Differential antreibt. Alternativ ist es aber auch möglich, dass mehr als ein Elektromotor vorhanden ist, wobei zumindest einer der Elektromotoren lediglich ein Rad antreibt. Die etwaigen Drehgeschwindigkeitsunterschiede bei der Kurvenfahrt werden in diesem Fall elektronisch ausgeregelt.

Vorzugsweise ist ein Elektroauto ein Fahrzeug, dessen Antriebsdrehmoment bei konstant 50 Kilometer pro Stunde zu zumindest 50% vom Elektromotor stammt. Besonders günstig ist es, wenn es sich um ein reines Elektroauto handelt, das heißt, dass die Räder ausschließlich elektrisch angetrieben sind.

Günstig ist es, wenn der Elektromotor vollständig zwischen den Achsen angeordnet ist. Hierunter ist insbesondere zu verstehen, dass der Elektromotor in einem Bereich angeordnet ist, der sich zwischen zwei Ebenen befindet, wobei jede der Ebenen vertikal verläuft und durch die Drehachsen der Räder des Elektroautos bei Geradeausfahrt geht. Besonders günstig ist es, wenn der Abstand des Elektromotors zur ersten Achse möglichst wenig, vorzugsweise höchstens um den Faktor zwei, von einem Abstand von der zweiten Achse abweicht. Ein derartiges Elektroauto hat ein besonders kleines Massenträgheitsmoment bezüglich der Drehung um die Hochachse. Das Elektroauto hat daher besonders vorteilhafte Fahreigenschaften.

Günstig ist es, wenn der Abstand zwischen dem bezüglich der Längsachse des Elektroautos vordersten Ende des Elektromotors, insbesondere des vorderen Elektromotor-Moduls, und dem hintersten Ende des Elektromotors, vorzugsweise dem hintersten Elektromotor-Modul, höchsten 15 % des Achsabstands beträgt.

Vorzugsweise besitzt das Elektroauto einen Fahrzeugboden. Der Elektromotor und die Batterie können auf dem Fahrzeugboden angeordnet sein. Alternativ sind sie am Fahrzeugboden hängend montiert. Die hängende Montage hat den Vorteil, besonders leicht durchgeführt werden zu können. Die Montage auf dem Fahrzeugboden bietet Vorteil bei dem Schutz der Batterien gegen Einwirkungen von außen.

Gemäß einer bevorzugten Ausführungsform ist der Elektromotor aus mindestens drei, vorzugsweise mindestens vier, Elektromotor-Modulen aufgebaut, wobei die Elektromotor-Module bezüglich einer Motor-Drehachse hintereinander angeordnet sind und mehrere gekoppelte Rotorwellen oder eine gemeinsame Rotorwelle haben. Die Elektromotor-Module sind vorzugsweise baugleich ausgebildet und miteinander verbunden.

Vorzugsweise ist zwischen zwei Elektromotor-Modulen ein Wellenlager für die durchgehende Rotorwelle des Elektromotors angeordnet. Auf diese Weise werden Schwingungen des Rotors vermindert, wenn das Auto über unebenen Untergrund fährt.

Vorzugsweise ist der Elektromotor ein Außenläufer, wobei der Rotor einen, insbesondere T-förmigen Außenabschnitt hat und wobei der Stator zumindest ein Spulenpaket aufweist, das zwischen dem Außenabschnitt und der Rotorwelle angeordnet ist. Der, insbesondere T-förmige, Außenabschnitt kann auch als Rotorglocke bezeichnet werden. Auf diese Weise ergibt sich ein hohes Drehmoment bei gleichzeitig geringer Bauhöhe. In anderen Worten ragt das zumindest eine Spulenpaket zwischen den Außenabschnitt und dem verbleibenden Teil des Rotors. Es ist möglich, nicht aber notwendig, dass die Rotorglocke symmetrisch bezüglich einer Symmetrieebene, die senkrecht zur Motor-Drehachse verläuft, ist. Die Bezeichnung T-förmig bezieht sich auf einen Querschnitt in einer Ebene, in der die Mittelpunktlinie liegt.

Gemäß einer bevorzugten Ausführungsform sind die Rotorglocke und die Rotorwelle formschlüssig miteinander verbunden. Beispielsweise hat die Rotorglocke eine Innenverzahnung und die Welle des Rotors eine Außenverzahnung, wobei die Rotorglocke mittels der Innenverzahnung und der Außenverzahnung drehfest mit der Welle verbunden ist. Das erleichtert die Montage.

Vorzugsweise umfasst der Außenabschnitt auf seiner radial einwärtigen Seite Permanentmagnete. Das zumindest eine Spulenpaket ist elektrisch, mechanisch und/oder thermisch mit einer Kappe des Stators kontaktiert. In anderen Worten ist das zumindest eine Spulenpaket so an der Kappe des Stators befestigt, dass die Abwärme des Spulenpakets aktiv oder passiv beim Betrieb des Elektroautos abgeführt wird.

Die Elektromotor-Module sind vorzugsweise elektrisch kommutierte permanentmagneterregte Synchronmotoren.

Besonders günstig ist es, wenn das Elektroauto einen elektronischen Motorregler aufweist, mittels dem die Gleichspannung der Batterie in eine Wechselspannung einer variabel vorgebbaren Frequenz umwandelbar ist. Diese Wechselspannung wird an die Elektromotor-Module angelegt, sodass diese mit einer Drehfrequenz drehen, die gleich der vorgebbaren Frequenz oder einem Bruchteil davon ist.

Günstig ist es, wenn der Elektromotor eine Baulänge hat, die zumindest einem Drittel, vorzugsweise zumindest der Hälfte, eines Achsabstands zwischen der ersten Achse und der zweiten Achse entspricht. Die große Baulänge führt zu einem hohen maximalen Drehmoment. Bisher ist es zum Erzielen eines hohen Drehmoments vorteilhaft, den Rotordurchmesser zu erhöhen. Aufgrund der wünschenswerten modularen Bauweise des Elektromotors kann hier jedoch die Baulänge durch die mehrfache Verwendung gleicher Elektromotormodule vergrößert werden, ohne dass die ansonsten üblichen Nachteile wie beispielsweise eine aufwändigere Fertigung entstehen.

Günstig ist es, wenn der Rotor eine Hohlwelle aufweist. Auf diese Weise wird die schwingende Masse reduziert. Zudem ist es möglich, dass der Rotor von innen gekühlt wird, indem ein Kühlfluid, insbesondere Luft oder Kühlflüssigkeit, beispielsweise Wasser, durch die Hohlwelle geschickt wird.

Günstig ist es, wenn die Batterie so angeordnet ist, dass 80, vorzugsweise zumindest 85, Gewichtsprozent der Masse der Batterie zwischen den Achsen angeordnet sind. Diese Anordnung führt zu besonders guten Fahreigenschaften des Elektroautos.

Vorzugsweise liegt ein Elektromotor-Massenschwerpunkt des Elektromotors zwischen den Achsen, insbesondere in einem zentralen Drittel, vorzugsweise einem zentralen Fünftel (Quintil), zwischen den Achsen. Wenn das Auto so steht, dass beide Achsen sich entlang einer horizontalen Ebene erstrecken, verläuft eine erste Vertikalebene so, dass sich die erste Achse entlang der ersten Vertikalachse erstreckt. Eine zweite Vertikalachse verläuft so, dass sich die zweite Achse entlang der zweiten Vertikalachse erstreckt. Die beiden Vertikalachsen verlaufen parallel zueinander. Das zentrale Drittel ist derjenige Bereich zwischen zwei weiteren Vertikalachsen, deren Abstand von einem Drittel des Abstands von erster und zweiter Vertikalachse entspricht, deren Abstand von einem Mittelpunkt, der genau zwischen der ersten und der zweiten Vertikalachse liegt, gleich ist. Der entsprechende Massenschwerpunkt ist dann zwischen diesen beiden zusätzlichen Vertikalachsen angeordnet. Eine derartige Anordnung der Batterie bzw. des Elektromotors führt zu besonders günstigen Fahreigenschaften, da das Massenträgheitsmoment bezüglich einer Gier-, Nick- oder Rollbewegung des Elektroautos besonders klein ist.

Günstig ist es, wenn der Elektromotor-Massenschwerpunkt bezüglich der Längsrichtung des Elektroautors im zentralen Drittel, insbesondere dem zentralen Fünftel, liegt. Das zentrale Drittel erstreckt sich in Richtung quer zur Längsrichtung, also in der Erstreckungsrichtung der Achsen. Die geometrische Mittelpunktlinie bezüglich der Längsrichtung ist die Gerade, die den gleichen Abstand zu linkem und rechtem Vorderrad und linkem und rechtem Hinterrad hat. Die Mittelpunktlinie verläuft zentrisch durch das zentrale Drittel.

Vorzugsweise hat der Fahrgastraum einen mitteltunnelfreien Boden. Da die Batterie und der Elektromotor gleiche Bauhöhen haben, ist ein Mitteltunnel zum Aufnehmen eines vergrößerten Elektromotors entbehrlich. Der Erfindung liegt die Erkenntnis zugrunde, dass es vorteilhaft ist, das Drehmoment des Elektromotors dadurch zu erhöhen, dass er lang ausgebildet wird. Bisherige Autos setzen auf Elektromotoren mit möglichst großem Rotor-Durchmesser und geringer Baulänge, um das Drehmoment zu erhöhen. Das aber führt zu einer nachteiligen Lage des Elektromotor-Massenschwerpunkts und/oder macht einen Mitteltunnel notwendig. Das erfindungsgemäße Elektroauto kommt ohne Mitteltunnel aus.

Unter dem Merkmal, dass der Fahrgastraum einen mitteltunnelfreien Boden hat, wird insbesondere verstanden, dass der Boden im technischen Sinne eben ist. In anderen Worten sind Erhebungen zwar möglich, die maximale Erhebung ist aber klein. Insbesondere ist die maximale Erhebung zwischen Fahrer- und Beifahrersitz höchstens 10 Zentimeter über einer gedachten Ausgleichsebene durch den Boden des Fahrgastraumes.

Vorzugsweise besitzt das Elektroauto eine Längsachse und die Motor-Drehachse erstreckt sich entlang der Längsachse. Hierunter ist insbesondere zu verstehen, dass es zwar möglich, nicht aber notwendig ist, dass sich die Motor-Drehachse parallel zur Längsachse erstreckt. Insbesondere ist ein Versatzwinkel zwischen der Motor-Drehachse und der Längsachse möglich, der vorzugsweise höchstens 20°, insbesondere höchstens 5°, beträgt.

Vorzugsweise umfasst die Batterie zumindest zwei Batterie-Einheiten, wobei die Motor-Drehachse zwischen den Batterie-Einheiten verläuft. Unter dem Merkmal, dass die Motor-Drehachse zwischen den Batterie-Einheiten verläuft, wird verstanden, dass eine Projektion der Motor-Drehachse auf eine Ebene, entlang der sich die erste Achse und die zweite Achse erstrecken, zwischen einem ersten Batterieeinheit-Massenschwerpunkt der ersten Batterie-Einheit und einem zweiten Batterieeinheit-Massenschwerpunkt der zweiten Batterie-Einheit verläuft. Besonders günstig ist es, wenn die Drehachse so verläuft, dass - bezogen auf eine jeweilige Projektion auf die Ebene, entlang der die beiden Achsen verlaufen - die erste Batterie-Einheit von der zweiten Batterie-Einheit getrennt ist. In anderen Worten verläuft kein galvanisches Element einer Batterie-Einheit von einer Seite der Projektion der Drehachse auf die andere. Es ist allerdings möglich, dass elektrische Verbinder, insbesondere Kabel, von einer Seite der Projektion der Drehachse auf die andere Seite verlaufen.

Vorzugsweise besitzt der Elektromotor einen Rotor mit Permanentmagneten. Es ist dabei möglich, dass der Elektromotor ein Innenläufermotor ist. Eine weniger häufige, aber meist bessere Alternative ist der bei sonst gleichen Außenabmessungen wesentlich drehmomentstärkere Außenläufermotor.

Das Elektroauto besitzt vorzugsweise ein Differential und ein Getriebe, das im Drehmomentfluss zwischen dem Motor und dem Differential angeordnet ist. Es ist möglich, nicht aber notwendig, dass das Elektroauto ein zweites Differential und eines zweites Getriebe aufweist, das im Drehmomentfluss zwischen dem Motor und dem zweiten Differential angeordnet ist. Das erste Differential treibt vorzugsweise die Räder der Vorderachse an. Das zweite Differential treibt vorzugsweise die Räder der Hinterachse an. Mit zwei Differentialen kann ein Vierradantrieb realisiert werden. Das erste Differential und/oder das zweite Differential sind jeweils drehstarr mit dem entsprechenden Rotor des Elektromotors gekoppelt.

Der Elektromotor kann besonders einfach gefertigt werden, wenn er einen Rotor mit Permanentmagneten aufweist, wobei der Rotor in Längsrichtung verlaufende Nuten aufweist, in denen die Permanentmagneten angeordnet sind. Beispielsweise sind die Permanentmagneten in die Nuten eingeschoben.

Um besonders hohe Drehmomente zu erzielen und/oder einfach einen Vierradantrieb zu realisieren ist es günstig, wenn das Elektroauto einen zweiten Elektromotor, der aus zumindest zwei, insbesondere zumindest drei, zumindest vier, zumindest fünf, zumindest sechs oder mehr, Zweitelektromotor-Modulen aufgebaut ist, umfasst, wobei die Zweitelektromotor-Module einen gemeinsamen zweiten Rotor aufweisen und wobei der erste Rotor und der zweite Rotor parallel zueinander verlaufen. Es ist dabei möglich, dass der erste Elektromotor die Räder der ersten Achse antreibt und der zweite Elektromotor die Räder der zweiten Achse antreibt. Alternativ ist es auch möglich, dass der erste Elektromotor und der zweite Elektromotor gemeinsam die Räder einer der Achsen, beispielsweise der Vorderachse und/oder der Hinterachse, antreiben. Die Zahl der Zweitelektromotor-Module ist vorzugsweise kleiner als 30.

Gemäß einer bevorzugten Ausführungsform umfasst der Elektromotor einen zweiten Elektromotor, der vorzugsweise aus zumindest zwei Elektromotor-Modulen aufgebaut ist, einen dritten Elektromotor, der vorzugsweise aus zumindest zwei Elektromotor-Modulen aufgebaut ist, und einen vierten Elektromotor, der vorzugsweise aus zumindest zwei Elektromotor-Modulen aufgebaut ist, wobei jeder der Elektromotoren jeweils ein Rad, insbesondere über ein Winkelgetriebe, antreibt. Es ist günstig, wenn alle Elektromotor-Module baugleich sind. Es ist dann günstig, wenn alle Motoren von einer Motorsteuerung so angesteuert sind, dass sie ein gleiches Drehmoment auf das jeweilige Rad aufbringen, wobei vorzugsweise ein Durchdrehen unterdrückt wird. Eine solche Anti-Schlupf-Regelung gehört zum Stand der Technik und wird daher nicht weiter erläutert.

Vorzugsweise weist der Stator einen Basiskörper und ein zweites Spulenpaket auf, wobei das Spulenpaket an einer Kappe des Stators befestig ist und wobei die Kappe reversibel am Basiskörper befestigt ist. So ist der Elektromotor leicht zu montieren.

Im Folgenden wird die Erfindung anhand der beigefügten Zeichnungen näher erläutert. Dabei zeigt
- Figur 1a: eine dreidimensionale Teil-Ansicht auf ein erfindungsgemäßes Elektroauto gemäß einer ersten Ausführungsform,
- Figur 1b: das Elektroauto gemäß Figur 1a in einer Schnittansicht von hinten,
- Figur 2: ein Elektroauto gemäß einer zweiten Ausführungsform,
- Figur 3: ein erfindungsgemäßes Elektroauto gemäß einer dritten Ausführungsform,
- Figur 4: ein erfindungsgemäßes Elektroauto gemäß einer vierten Ausführungsform,
- Figur 5: ein erfindungsgemäßes Elektroauto gemäß einer fünften Ausführungsform,
- Figur 6: ein erfindungsgemäßes Elektroauto gemäß einer sechsten Ausführungsform,
- Figur 7: mit den Teilfiguren 7a und 7b als isometrische Ansichten und Teilfigur 7c als Schnittdarstellung eines Elektromotors als Innenläufer für ein erfindungsgemäßes Elektroauto und
- Figur 8: mit den Teilfiguren 8a und 8b, als isometrische Ansichten und mit den Teilfiguren 8c und 8d als Schnittdarstellungen eines erfindungsgemäßen Elektromotors als Außenläufer für ein erfindungsgemäßes Elektroauto.

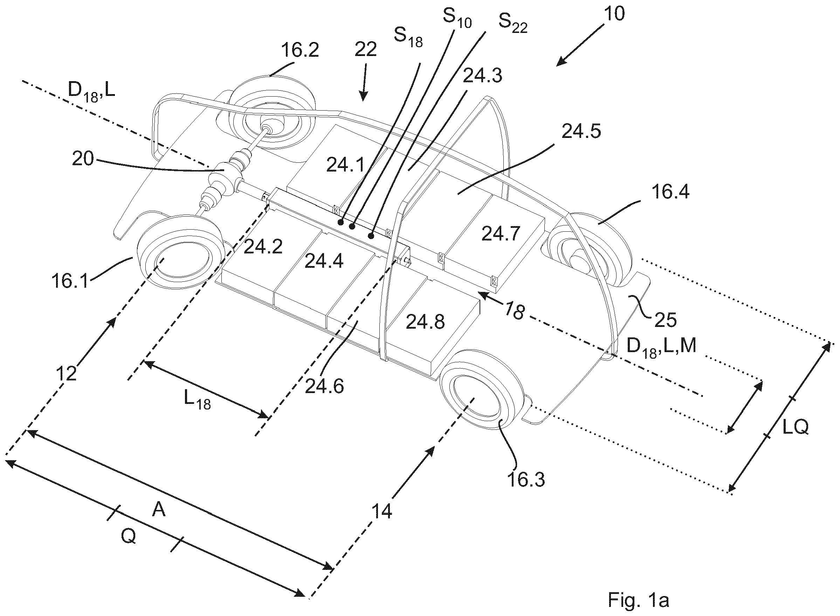

Figur 1a zeigt ein erfindungsgemäßes Elektroauto 10 in Form eines Elektroautos, das eine erste Achse 12 in Form einer Vorderachse und eine zweite Achse 14 in Form einer Hinterachse aufweist. An der ersten Achse 12 sind Räder 16.1, 16.2 befestigt, an der zweiten Achse 14 sind Räder 16.3, 16.4 befestigt. Ein Elektromotor 18 treibt über ein Differentialgetriebe 20, das auch Differential genannt werden kann, die Räder 16.1, 16.2 der ersten Achse 12 an.

Der Elektromotor 18 wird von einer Batterie 22 mit Strom versorgt. Die Batterie 22 umfasst zumindest zwei, im vorliegenden Fall acht, Batterie-Einheiten 24.1, 24.2, ..., 24.8.

Es ist zu erkennen, dass eine Motor-Drehachse D₁₈ zwischen den Batterie-Einheiten 24.1, 24.3, 24.5, 24.7 einerseits und 24.2, 24.4, 24.6 und 24.8 andererseits verläuft. Eine Masse mᵣ der rechtsseitig der Motor-Drehachse D₁₈ angeordneten Batterie-Einheiten 24.1, 24.3, 24.5 und 24.7 entspricht einer Masse mₗ der Batterie-Elemente links der Motor-Drehachse D₁₈, also im vorliegenden Fall der Batterie-Elemente 24.2, 24.4, 24.6 und 24.8.

Unter dem Merkmal, dass die beiden Massen mᵣ, mₗ einander entsprechen, wird insbesondere verstanden, dass die beiden Massen um höchstens 20%, vorzugsweise höchstens 15%, voneinander abweichen.

Das Elektroauto 10 besitzt einen Fahrzeugboden 25. In der vorliegenden Ausführungsform sind sowohl die Batterie 22 als auch der Elektromotor 18 auf dem Fahrzeugboden 25 montiert. Das Elektroauto 10 umfasst zudem nicht eingezeichnete Komponenten, wie beispielsweise eine Außenhülle, insbesondere aus Blech, sowie Sitze und eine Lenkung.

Figur 1a zeigt zudem, dass der Elektromotor-Massenschwerpunkt S₁₈ sich in einem zentralen Längs-Viertel LQ, insbesondere Längs-Fünftel, befindet. Generell ist es günstig, wenn der Elektromotor-Massenschwerpunkt S₁₈ möglichst dicht an einer Mittelpunktlinie M liegt.

Es ist zudem zu erkennen, dass alle Batterie-Module 24 angeordnet sind und damit die Batterie 22 zwischen den Achsen 12, 14 angeordnet ist. Es ist allerdings auch möglich, dass ein Teil der Batterie-Module 24.j (j=1, 2, ..., Anzahl der Batterie-Module) jenseits der Achsen angeordnet ist, günstig ist es aber, wenn zumindest 80 Gewichtsprozent der Masse der Batterie-Module 24.j zwischen den Achsen angeordnet ist. Eine Baulänge L₁₈ des Elektromotors 18 beträgt in der vorliegenden Ausführungsform das 0,4-fache des Achsabstands A.

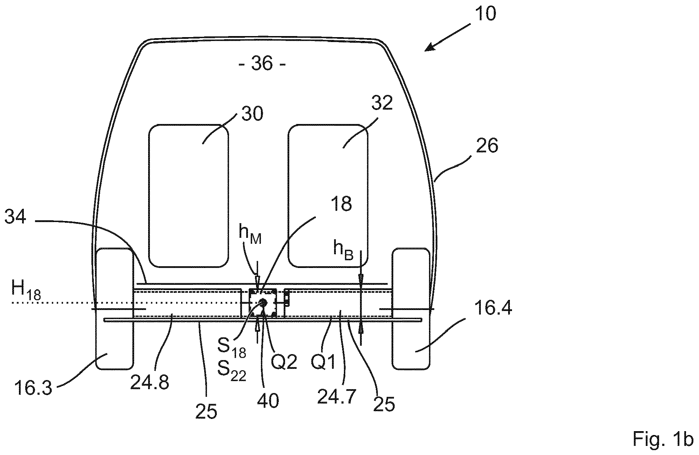

Figur 1b zeigt das Elektroauto 10 in einer Ansicht von hinten. Es ist zu erkennen, dass eine Elektromotor-Bauhöhe h_{M} einer Batterie-Bauhöhe h_{B} entspricht. Die Elektromotor-Bauhöhe h_{M} ist die Höhe desjenigen gedachten Quaders Q₁ minimalen Volumens, der 90% der Masse der Batterie 22 umschließt. Figur 1b zeigt zudem eine Karosserie 26 des Elektroautos 10. Eingezeichnet ist zudem ein Fahrersitz 30 und ein Beifahrersitz 32, die beide auf einem ebenen Boden 34 eines Fahrgastraums 36 angeordnet sind.

Es ist zu erkennen, dass der Elektromotor-Massenschwerpunkt S₁₈ auf einer Höhe H₁₈ liegt, die einer Höhe H₂₂ des Batterie-Massenschwerpunkt S₂₂ entspricht.

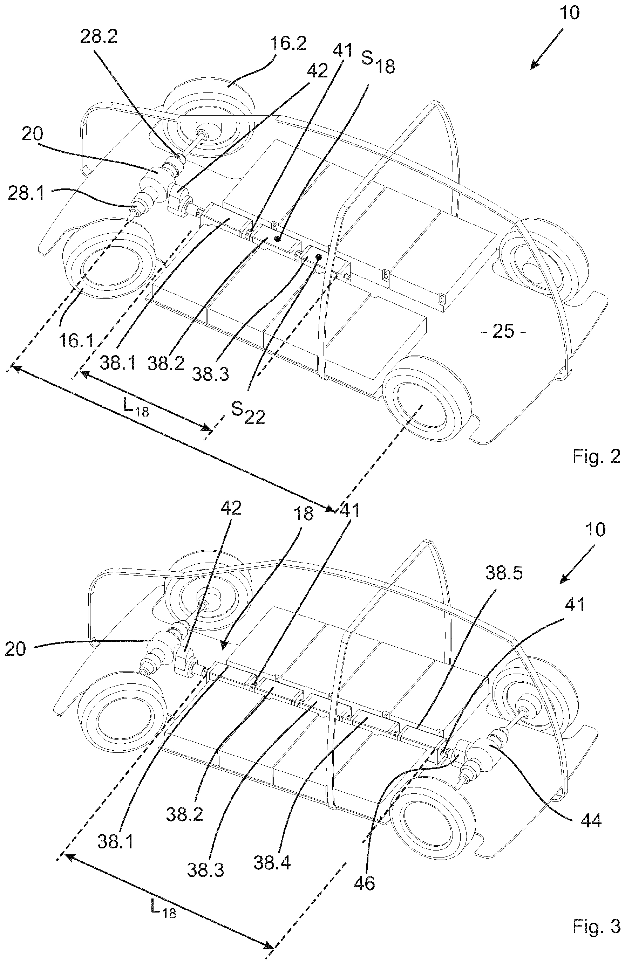

Figur 2 zeigt eine zweite Ausführungsform eines erfindungsgemäßen Elektroautos 10, bei der der Elektromotor 18 aus drei hintereinander gekoppelten Elektromotor-Modulen 38.1, 38.2, 38.3 aufgebaut ist. Alle drei Elektromotor-Module 38.1, 38.2, 38.3 sind baugleich und weisen miteinander gekoppelte Rotorwellen 41 auf. Es ist möglich, nicht aber notwendig, dass wie in der vorliegenden Ausführungsform jedes Elektromotor-Modul 38.i (i = 1, ... N; N: Anzahl der Elektromotor-Module) ein eigenes Rotorelement aufweist, wobei die einzelnen Rotorelemente miteinander verbunden sind und somit den Rotor 39 bilden. Es ist auch möglich, dass der Rotor fügestellenfrei ausgebildet ist. Die Elektromotor-Module 38.i sind baugleich.

Figur 2 zeigt, dass das Elektroauto 10 ein zusätzliches Getriebe 42 zwischen dem Differentialgetriebe 20 und dem Elektromotor 18 aufweist. Auf diese Weise ist eine einfache Anpassung für die Rotordrehzahl an die Raddrehzahl möglich. Insbesondere kann der Elektromotor mit höheren Drehzahlen betrieben werden als ohne das Getriebe 42, bei dem es sich entsprechend vorzugsweise um ein Untersetzungsgetriebe handelt.

Eine Baulänge L₁₈ des Elektromotors 18 beträgt in der vorliegenden Ausführungsform ebenfalls das 0,4-fache des Achsabstands A.

Figur 3 zeigt eine weitere Ausführungsform eines erfindungsgemäßen Elektroautos 10, bei dem die gekoppelten Rotorwellen 41 des Elektromotors 18 sowohl mit dem Differential 20 als auch mit einem zweiten Differential 44 drehstarr verbunden sind. Im vorliegenden Fall ist das Ende der gekoppelten Rotorwelle 41 über ein zweites Getriebe 46 mit dem zweiten Differential 44 verbunden.

Anders als in der Ausführungsform gemäß der Figur 2 besitzt der Elektromotor 18 fünf Elektro-Module 38.i (N = 5). Ein maximales Drehmoment Mₘₐₓ des Elektromotors gemäß Figur 2 beträgt Mₘₐₓ = 300 Nm. Hingegen beträgt das maximale Drehmoment Mₘₐₓ für das Elektroauto gemäß Figur 3 Mₘₐₓ = 500 Nm. Es ist zu erkennen, dass das maximale Drehmoment mit der Anzahl der Elektromotor-Module N linear ansteigt.

Eine Baulänge L₁₈ des Elektromotors 18 beträgt in dieser Ausführungsform das 0,7-fache des Achsabstands A.

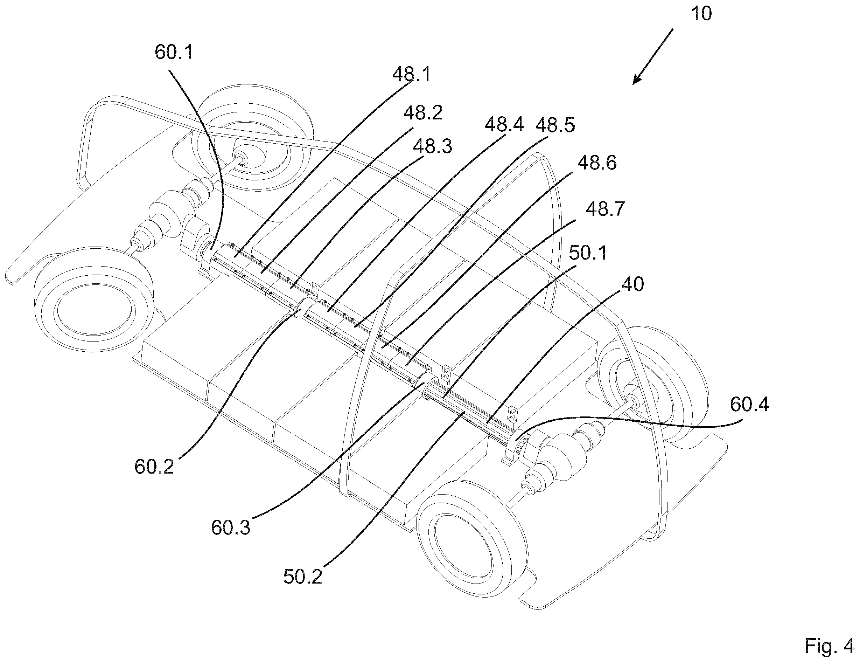

Figur 4 zeigt eine vierte Ausführungsform eines erfindungsgemäßen Elektroautos 10. Der Elektromotor 18 weist mehrere Stator-Spulenpakete 48.1, ..., 48.N₄₈ (N₄₈: Zahl der Statorpakete) auf. Jedes Stator-Spulenpaket 48.j (j = 1, ..., N₄₈) lässt sich entfernen, ohne dass die durchgehende Rotorwelle 40 ausgebaut werden muss. Es ist zu erkennen, dass die durchgehende Rotorwelle 40 Nuten 50.1, 50.2 aufweist, in die der Übersichtlichkeit halber nicht eingezeichnete Permanentmagneten eingeschoben sind. Der Elektromotor gemäß Figur 4 ist ein Innenläufer.

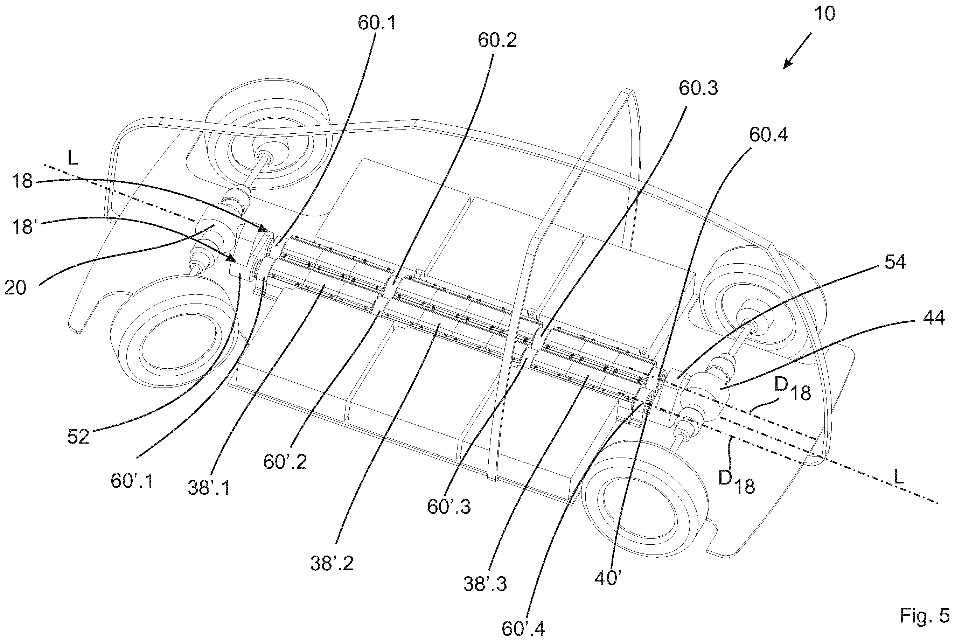

Figur 5 zeigt eine fünfte Ausführungsform eines erfindungsgemäßen Elektroautos 10, das einen zweiten Elektromotor 18' aufweist. Der zweite Elektromotor umfasst drei Elektromotor-Module 38'.1, 38'.2 und 38.'3. Die beiden Elektromotor-Module 38'.1, und 38'.3 sind baugleich. Die durchgehende Rotorwelle 40' verläuft im technischen Sinne parallel zur durchgehenden Rotorwelle 40, das heißt, dass kleine Abweichungen von beispielsweise höchstens 5° tolerierbar sind. Beide durchgehenden Rotorwellen 40 und 40' und damit die zugeordneten Motor-Drehachsen D₁₈, D'₁₈ verlaufen zudem - wie bei den übrigen Ausführungsformen - entlang einer Längsachse L des Elektroautos 10.

Die beiden Elektromotoren 18, 18' treiben gemeinsam ein erstes Koppelgetriebe 52 und ein zweites Koppelgetriebe 54 an. Das erste Koppelgetriebe 52 ist drehstarr mit dem ersten Differential 20 gekoppelt, das zweite Koppelgetriebe 54 ist mit dem zweiten Differential 44 drehstarr verbunden.

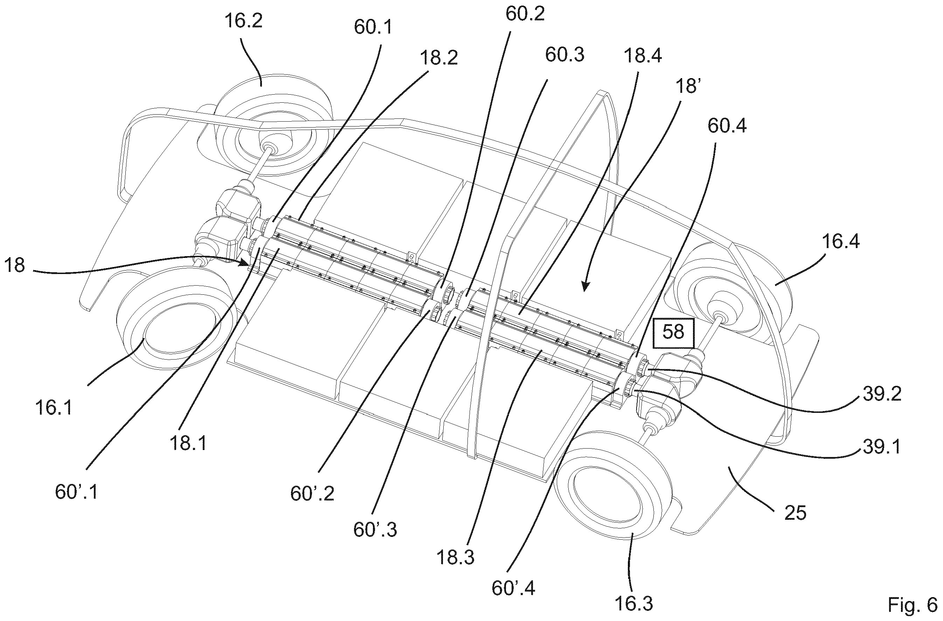

Figur 6 zeigt eine sechste Ausführungsform eines erfindungsgemäßen Elektroautos 10, bei dem 4 Elektromotoren 18.1,18.2,18.3 und 18.4 verwendet werden. Dabei treibt der erste Elektromotor 18.1 das erste Rad 16.1 und der zweite Elektromotor 18.2 das zweite Rad 16.2 an. Der dritte Elektromotor 18.3 treibt das dritte Rad 16.3 und der vierte Elektromotor 18.4 treibt das vierte Rad 16.4 an. Das Elektroauto 10 besitzt zudem eine schematisch eingezeichnete Motorsteuerung 58, die mit allen Elektromotoren und der Batterie verbunden ist. Die Motorsteuerung 58 ist ausgebildet zum Ansteuern aller Elektromotoren 18.1, ..., 18.4, sodass bei Kurvenfahrt des Elektroautos 10 die unterschiedlichen Winkelgeschwindigkeiten der Räder zu angepassten Drehzahlen der jeweiligen Elektromotoren führen, sodass der Schlupf bei allen Rädern 16.i gleich groß ist und im Idealfall null beträgt. Es ist möglich, dass jeder Elektromotor aus zwei oder mehr baugleichen Elektromotor-Modulen aufgebaut ist.

Bei allen gezeigten Elektroautos liegt ein Batteriemassenschwerpunkt S₂₂ (vgl. Fig. 1a) zwischen den Achsen 12, 14. Bei den gezeigten Ausführungsformen beträgt ein Abstand des Batterie-Massenschwerpunkts S₂₂ von einem Fahrzeug-Massenschwerpunkt S₁₀ höchstens ein Viertel eines Achsabstands A der beiden Achsen 12, 14. Ebenso liegt ein Elektromotor-Massenschwerpunkt S₁₈ dicht beim Fahrzeug-Massenschwerpunkt S₁₆, insbesondere in einem zentralen Quintil Q entlang der Längsachse L zwischen den Achsen 12, 14.

Figur 1b zeigt, dass sich die Batterie 22, insbesondere deren galvanische Zellen, nicht unterhalb des Elektromotors 18 befinden. In anderen Worten sind alle Batterie-Module 24.i bezüglich der Längsachse L entweder rechts oder links des Elektromotors 18 angeordnet, nicht aber oberhalb oder unterhalb desselben.

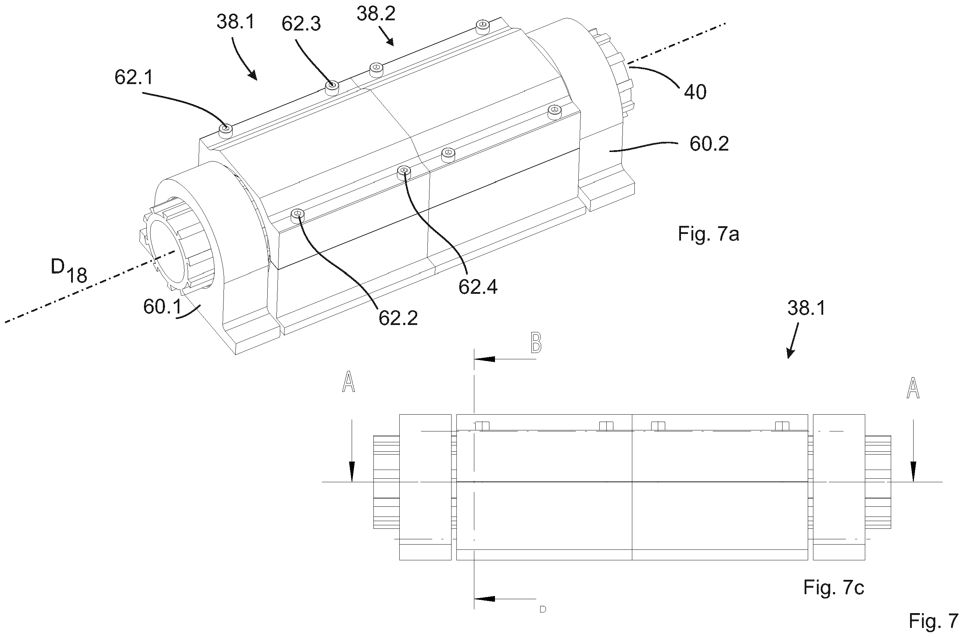

Figur 7a zeigt zwei hintereinander liegende Elektromotor-Module 38.1 und 38.2 in der Version eines Innenläufers und Wellenlager 60.1, 60.2, mit denen die durchgehende Rotorwelle 40 gelagert und am Fahrzeugboden 25 (vgl. Fig. 4, 5) befestigt ist. Es ist zu erkennen, dass die Elektromotor-Module 38.1, 38.2 mittels lösbarer Befestigungselemente, im vorliegenden Fall in Form von Schrauben 62.1, ... entfernt werden können.

Alle Elektromotor-Module 38.k (k = 1, 2, ... Anzahl der Elektromotor-Module) sind elektrisch kommutierte permanenterregte Synchronmotoren.

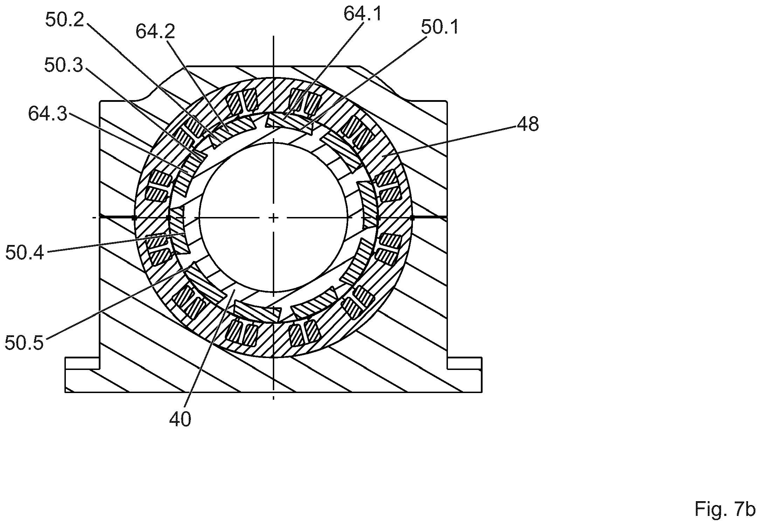

Figur 7b zeigt in einem Vertikalschnitt durch ein Elektromotor-Modul der Innenläuferversion, dass in die Nuten 50.1, 50.2 ....derdurchgehenden Rotorwelle 40 Permanentmagnete 64.1 ... eingeschoben sind, die vom Spulenpaket 48 zur Rotation angeregt werden.

Figur 7c zeigt eine Seitenansicht der Elektromotor-Module 38.1 und 38.2der Innenläuferversion.

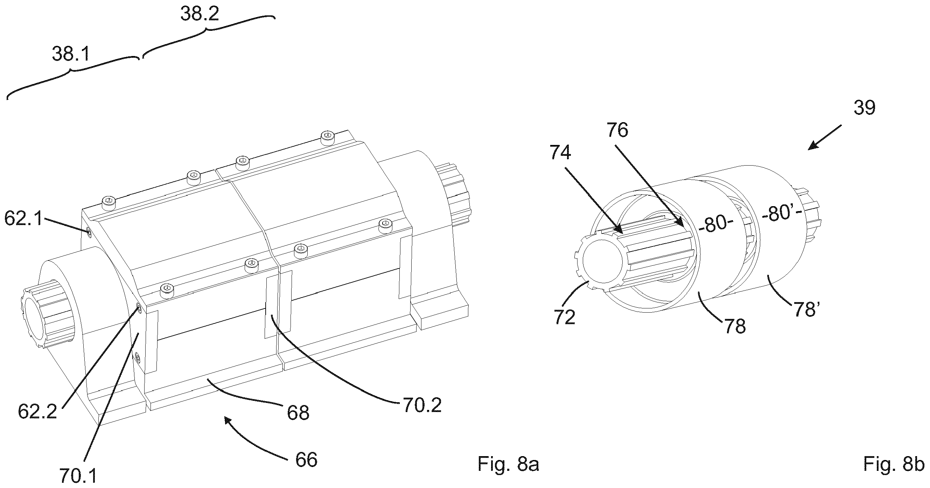

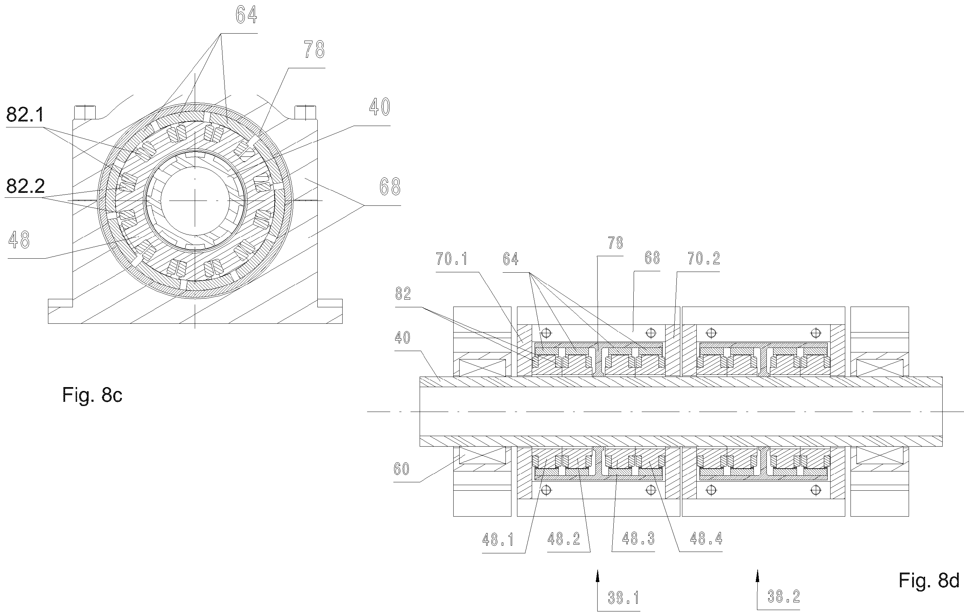

Figur 8 zeigt zwei hintereinander liegende Elektromotor-Module 38.1 und 38.2 der Außenläuferversion deren Stator 66 einen Basiskörper 68 sowie eine erste Kappe 70.1 und eine zweite Kappe 70.2 aufweist. Die Kappen 70.1, 70.2 sind mit Schrauben 62.1, 62.2, ..., 62.8 am Basiskörper 68 reversibel befestigt. Jede Kappe 70.i ist mit mindestens einem Stator-Spulenpaket fest verbunden.

Figur 8b zeigt wie die übrigen Teilfiguren der Figur 8 eine maßstabgemäße Ansicht des Rotors 39, der eine Welle 72 in Form einer Hohlwelle umfasst. Die Welle 72 besitzt eine Außenverzahnung 74, auf der mit einer Innenverzahnung 76 eine Rotorglocke 78 sitzt. Die Rotorglocke 78 bildet einen T-förmigen Außenabschnitt des Rotors 39. Es ist zu erkennen, dass der Rotor 39 zudem eine zweite Rotorglocke 78' aufweist. Selbstverständlich können weitere Rotorglocken vorhanden sein. Beispielsweise umfasst der Elektromotor zumindest drei Rotorglocken. In Fig. 8b sind die Permanentmagnete des Rotors der Übersichtlichkeit halber nicht dargestellt.

Figur 8c zeigt einen Schnitt durch das Elektromotor-Modul 38.1 der Außenläuferversion. Es ist zu erkennen, dass die Permanentmagnete 64 auf einer Innenseite eines Mantelabschnitts 80 der Rotorglocke 78 angeordnet sind. Diese werden von dem Stator-Spulenpaket 48 bewegt. Beispielweise sind die Permanentmagnete 64.i in Nuten in der radial einwärtigen Seite des Mantelabschnitts 80 eingeschoben.

Figur 8d zeigt eine Schnittansicht durch die Elektromotor-Module 38.1 und 38.2 der Außenläuferversion mit den T-förmigen Rotorglocken 78 und 78'. Es ist zu erkennen, dass Spulen 82.i starr mechanisch und zudem thermisch mit der Kappe 70 des Stators 66 verbunden sind. In anderen Worten ist zumindest ein Spulenpaket 48, das die Spulen 82.i umfasst, so an der Kappe 70 des Stators 66 befestigt, dass Abwärme des Spulenpakets 48 aktiv oder passiv beim Betrieb des Elektroautos abgeführt wird.

**Bezugszeichenliste**

| | | | |
|---|---|---|---|
| 10 | Elektroauto | 66 | Stator |
| 12 | erste Achse | 68 | Basiskörper |
| 14 | zweite Achse | 70 | Kappe |
| 16 | Räder | 72 | Welle |
| 18 | Elektromotor | 74 | Außenverzahnung |
| 20 | Differential | 76 | Innenverzahnung |
| 22 | Batterie | 78 | Rotorglocke |
| 24 | Batterie-Modul | 80 | Mantelabschnitt |
| 25 | Fahrzeugboden | 82 | Spule |
| 26 | Karosserie | | |
| 28 | Gelenkwelle | A | Achsabstand |
| 30 | Fahrersitz | D18 | Motor-Drehachse |
| 32 | Beifahrersitz | h_{M} | Elektromotor-Bauhöhe |
| | | h_{B} | Batterie-Bauhöhe |
| 34 | Boden | i | Laufindex |
| 36 | Fahrgastraum | | |
| 38 | Elektromotor-Modul | j | Laufindex |
| 39 | Rotor | L | Längsachse |
| 40 | Rotorwelle, durchgehend | mₗ | Masse der Batterie-Elemente links der Motor-Drehachse |
| 41 | Rotorwelle, gekoppelt | | |
| 42 | Getriebe | mᵣ | Masse der Batterie-Elemente rechts der Motor-Drehachse |
| 44 | zweites Differential | Mₘₐₓ | maximales Drehmoment |
| 46 | zweites Getriebe | | |
| 48 | Stator-Spulenpaket | N₃₈ | Anzahl der Elektromotor-Module |
| 50 | Nut | N₄₈ | Zahl der Statorpakete |
| 52 | erstes Koppelgetriebe | Q | zentrales Perzentil |
| 54 | zweites Koppelgetriebe | LQ | Längs-Viertel |
| 56 | Elektromotor-Einheit | S₂₂ | Batterie-Massenschwerpunkt |
| 58 | Motorsteuerung | S₁₈ | Elektromotor-Massenschwerpunkt |
| 60 | Wellenlager | S₁₀ | Fahrzeug-Massenschwerpunkt |
| 62 | Schrauben | | |
| 64 | Permanentmagnet | | |

## Patentansprüche

1. Elektroauto mit
(a) einer ersten Achse (12),
(b) einer zweiten Achse (14),
(c) einem Elektromotor (18) zum Antreiben von zumindest einer der Achsen, der eine Elektromotor-Bauhöhe (h_{M}) hat, und
(d) einer Batterie (22) zum Versorgen des Elektromotors (18) mit elektrischer Energie, die eine Batterie-Bauhöhe (h_{B}) hat, wobei
(e) die Elektromotor-Bauhöhe (h_{M}) der Batterie-Bauhöhe (h_{B}) entspricht,
(f) wobei der Elektromotor (18) und die Batterie auf gleicher Höhe angeordnet sind und
(g) ein Batterie-Massenschwerpunkt (S₂₂) der Batterie (22) in einem zentralen Drittel (Q) zwischen den Achsen (12, 14) liegt,
**dadurch gekennzeichnet, dass**
(h) der Elektromotor (18) aus zumindest zwei Elektromotor-Modulen (38.1, 38.2) aufgebaut ist,
(i) die Elektromotor-Module (38.1, 38.2) bezüglich einer Motor-Drehachse (D₁₈) hintereinander angeordnet sind und
(j) die Elektromotor-Module (38.1, 38.2) eine gemeinsame Rotorwelle (40) haben oder gekoppelte Rotorwellen (41) besitzen.

2. Elektroauto nach Anspruch 1, **dadurch gekennzeichnet, dass**
(a) der Elektromotor (18) ein Außenläufer ist,
(b) ein Rotor (39) des Elektromotors (18) eine T-förmige Rotorglocke (80) hat und
(c) ein Stator (66) des Elektromotors (18) zumindest ein Spulenpaket (48), das zwischen der Rotorglocke (80) und der Rotorwelle (40) angeordnet ist, aufweist.

3. Elektroauto nach Anspruch 2, **dadurch gekennzeichnet, dass** die Rotorglocke (78) bezüglich eines Querschnitts in radialer Richtung T-förmig ist.

4. Elektroauto nach Anspruch 2 oder 3, **dadurch gekennzeichnet, dass**
(a) die Rotorglocke (78) eine Formschlusskontur wie z.B. eine Innenverzahnung hat,
(b) die Rotorwelle (40) eine Formschlusskontur wie z.B. eine Außenverzahnung hat, und
(c) die Rotorglocke (78) mittels dieser Formschlusskonturen drehfest mit der Rotorwelle (40) verbunden ist.

5. Elektroauto nach einem der vorstehenden Ansprüche, **dadurch gekennzeichnet, dass**
(a) ein Stator (66) des Elektromotors (18) des Elektroautos über eine Kappe (70) mit einem Basiskörper (68) des Elektromotors (18) verbunden ist und mindestens zwei oder mehr Spulenpakete (48.1,48.2, ...) aufweist, und
(b) die Spulenpakete (48.1, 48.2) an einer Kappe (70) des Stators (66) befestig sind,
(c) wobei die Kappe (70) reversibel am Basiskörper (68) befestigt ist.

6. Elektroauto nach einem der vorstehenden Ansprüche, **dadurch gekennzeichnet, dass**
ein Elektromotor-Massenschwerpunkt (S₁₈) des Elektromotors (18) in einem zentralen Drittel (Q) zwischen den Achsen (12, 14) liegt.

7. Elektroauto nach einem der vorstehenden Ansprüche, **dadurch gekennzeichnet, dass**
- die Batterie (22) zumindest zwei Batterie-Einheiten aufweist und
- die Motor-Drehachse (D₁₈) zwischen den Batterie-Einheiten verläuft.

8. Elektroauto nach einem der vorstehenden Ansprüche, **gekennzeichnet durch**
(a) ein Differential (20) und
(b) ein Getriebe (42), das im Drehmomentfluss zwischen dem Motor und dem Differential (20) angeordnet ist.

9. Elektroauto nach einem der vorstehenden Ansprüche, **gekennzeichnet durch**
(a) ein zweites Differential und
(b) ein zweites Getriebe, das im Drehmomentfluss zwischen dem Motor und dem zweiten Differential angeordnet ist.

10. Elektroauto nach einem der vorstehenden Ansprüche 1 oder 3 bis 9, **dadurch gekennzeichnet, dass**
- der Elektromotor als Innenläufer eine Rotorwelle (40) mit Permanentmagneten (64) aufweist und dass
- die Rotorwelle (40) in Längsrichtung verlaufende Nuten (50) aufweist, in denen die Permanentmagnete (64) angeordnet sind.

11. Elektroauto nach einem der vorstehenden Ansprüche, **gekennzeichnet durch**
- einen zweiten Elektromotor (18.2), der aus zumindest zwei Zweitelektromotor-Modulen (38.2) aufgebaut ist,
- wobei die Zweitelektromotor-Module (38.2) einen gemeinsamen zweiten Rotor (39.1) aufweisen und
- wobei der erste Rotor (39.1) und der zweite Rotor (39.2) parallel zueinander verlaufen.

12. Elektroauto nach einem der vorstehenden Ansprüche, **gekennzeichnet durch**
(a) einen zweiten Elektromotor (18.2),
(b) einen dritten Elektromotor (18.3), und
(c) einen vierten Elektromotor (18.4),
(d) wobei jeder der Elektromotoren (18.1, 18.2, 18.3, 18.4) jeweils ein Rad (16.1, 16.2, 16.3, 16.4), insbesondere über ein Winkelgetriebe, antreibt.

13. Elektroauto nach einem der vorstehenden Ansprüche, **dadurch gekennzeichnet, dass** der Elektromotor-Massenschwerpunkt (S₁₈) sich in einem zentralen Längs-Viertel, insbesondere Längs-Fünftel, befindet.

14. Elektroauto nach einem der vorstehenden Ansprüche 1 bis 9 oder 11 bis 13, **dadurch gekennzeichnet, dass**
(a) der Elektromotor (18) ein Außenläufer ist,
(b) ein Stator (66) des Elektromotors (18) zumindest ein Spulenpaket (48) aufweist, und
(c) ein Rotor (39) des Elektromotors (18) eine Rotorglocke (78) aufweist, die das Spulenpaket (48) radial hülsenförmig umgibt.

15. Elektroauto nach Anspruch 14, **dadurch gekennzeichnet, dass** die Rotorglocke (78) bezüglich eines Querschnitts in radialer Richtung T-förmig ist.

## Claims

1. An electric car with
(a) a first axle (12),
(b) a second axle (14),
(c) an electric motor (18) for driving at least one of the axles, which has an electric motor overall height (h_{M}), and
(d) a battery (22) for supplying the electric motor (18) with electrical energy, said battery having a battery overall height (h_{B}), wherein
(e) the electric motor overall height (h_{M}) corresponds to the battery overall height (h_{B}),
(f) wherein the electric motor (18) and the battery are arranged at the same height, and
(g) a battery mass centre of gravity (S₂₂) of the battery (22) lies in a central third (Q) between the axles (12, 14),
**characterized in that**
(h) the electric motor (18) is composed of at least two electric motor modules (38.1, 38.2) and
(i) the electric motor modules (38.1, 38.2) are arranged one behind the other in relation to a motor rotational axis (D₁₈) and
(j) the electric motor modules (38.1, 38.2) have a common rotor shaft (40) or coupled rotor shafts (41),

2. The electric car according to claim 1, **characterised by** the fact that
(a) the electric motor (18) is an external rotor motor,
(b) a rotor (39) of the electric motor (18) has a T-shaped drum (80) and
(c) a stator (66) of the electric motor (18) comprises at least one coil package (48), which is arranged between the drum (80) and the rotor shaft (40).

3. The electric car according to claim 2, **characterised by** the fact that the drum (78) is T-shaped in the radial direction in relation to a cross-section.

4. The electric car according to claim 2 or 3, **characterised by** the fact that
(a) the drum (78) has a form-fit contour, such as an inner toothing,
(b) the rotor shaft (40) has a form-fit contour, such as an outer toothing, and
(c) the drum (78) is connected to the rotor shaft (40) by means of these form-fit contours such that the connection is torque-proof.

5. The electric car according to one of the above claims, **characterised by** the fact that
(a) the stator (66) of the electric motor (18) of the electric car is connected to the base body (68) via a cap (70) and comprises at least two or more coil packages (48.1, 48.2, ...), and
(b) the coil packages (48.1, 48.2) are fixed to a cap (70) of the stator (66),
(c) wherein the cap (70) is reversibly fixed to the base body (68).

6. The electric car according to one of the above claims, **characterised by** the fact that
an electric motor mass centre of gravity (S₁₈) of the electric motor (18) lies in a central third (Q) between the axles (12, 14).

7. The electric car according to one of the above claims, **characterised by** the fact that
- the battery (22) features at least two battery units and
- the motor rotational axis (D₁₈) extends between the battery units.

8. The electric car according to one of the above claims, **characterised by**
(a) a differential (20) and
(b) a gearbox (42) that is arranged in the torque flow between the motor and the differential (20).

9. The electric car according to one of the above claims, **characterised by**
(a) a second differential and
(b) a second gearbox that is arranged in the torque flow between the motor and the second differential.

10. The electric car according to one of the above claims, **characterised by** the fact that
- as an internal rotor motor, the electric motor has a rotor shaft (40) with permanent magnets (64) and that
- the rotor shaft (40) comprises grooves (50) that extend in the longitudinal direction, the permanent magnets (64) being arranged in said grooves.

11. The electric car according to one of the above claims, **characterised by**
- a second electric motor (18.2), which is composed of at least two second electric motor modules (38.2),
- wherein the second electric motor modules (38.2) feature a common second rotor (39.1) and
- wherein the first rotor (39.1) and the second rotor (39.2) extend parallel to one another.

12. The electric car according to one of the above claims, **characterised by**
(a) a second electric motor (18.2),
(b) a third electric motor (18.3) and
(c) a fourth electric motor (18.4),
(d) wherein each electric motor (18.1, 18.2, 18.3, 18.4) drives a wheel (16.1, 16.2, 16.3, 16.4), especially via an angular gearbox.

13. The electric car according to one of the above claims, **characterised by** the fact that the electric motor mass centre of gravity (S₁₈) is situated in a central longitudinal quarter, especially in a longitudinal fifth.

14. The electric car according to one of the above claims 1 to 9 or 11 to 13, **characterised by** the fact that
(a) the electric motor (18) is an external rotor motor,
(b) a stator (66) of the electric motor (18) has at least one coil package (48), and
(c) a rotor (39) of the electric motor (18) comprises a drum (78), which radially surrounds the coil package (48) in the manner of a sleeve.

15. The electric motor according to claim 13, **characterised by** the fact that the drum (78) is T-shaped in the radial direction in relation to a cross-section.

## Revendications

1. Véhicule électrique, comportant
(a) un premier essieu (12),
(b) un second essieu (14),
(c) un moteur électrique (18) pour entraîner l'un au moins des essieux, ledit moteur électrique présentant une hauteur structurelle (h_{M}), et
(d) une batterie (22) pour alimenter le moteur électrique (18) en énergie électrique, la batterie présentant une hauteur structurelle (h_{B}), dans lequel
(e) la hauteur structurelle (h_{M}) du moteur électrique correspond à la hauteur structurelle (h_{B}) de la batterie,
(f) le moteur électrique (18) et la batterie sont disposés à la même hauteur, et
(g) un centre de masse (S₂₂) de la batterie (22) se situe dans un tiers central (Q) entre les essieux (12, 14),
**caractérisé en ce que**
(h) le moteur électrique (18) est constitué par au moins deux modules (38.1, 38.2) du moteur électrique,
(i) les modules (38.1, 38.2) du moteur électrique sont disposés l'un derrière l'autre par rapport à un axe de rotation (D₁₈) du moteur, et
(j) les modules (38.1, 38.2) du moteur électrique ont un arbre de rotor (40) commun ou possèdent des arbres de rotor (41) couplés.

2. Véhicule électrique selon la revendication 1, **caractérisé en ce que**
(a) le moteur électrique (18) est de type à induit extérieur,
(b) le rotor (39) du moteur électrique (18) présente une cloche de rotor (80) en forme de T, et
(c) un stator (66) du moteur électrique (18) comprend au moins un empilement de bobines (48) qui est disposé entre la cloche de rotor (80) et l'arbre de rotor (40).

3. Véhicule électrique selon la revendication 2, **caractérisé en ce que** la cloche de rotor (78) est en forme de T par référence à une section transversale en direction radiale.

4. Véhicule électrique selon la revendication 2 ou 3, **caractérisé en ce que**
(a) la cloche de rotor (78) présente un contour en coopération de forme, tel que par exemple une denture intérieure,
(b) l'arbre de rotor (40) présente un contour en coopération de forme, tel que par exemple une denture extérieure, et
(c) la cloche de rotor (78) est reliée solidairement en rotation à l'arbre de rotor (40) au moyen desdits contours en coopération de forme.

5. Véhicule électrique selon l'une des revendications précédentes, **caractérisé en ce que**
(a) un stator (66) du moteur électrique (18) du véhicule électrique est relié à un corps de base (68) du moteur électrique (18) par l'intermédiaire d'un capuchon et comprend au moins deux empilements de bobines ou plus (48.1, 48.2, ...), et
(b) les empilements de bobines (48.1, 48.2) sont fixés à un capuchon (70) du stator (66),
(c) le capuchon (70) étant fixé de façon réversible au corps de base (68).

6. Véhicule électrique selon l'une des revendications précédentes, **caractérisé en ce que**
un centre de masse (S₁₈) du moteur électrique (18) se situe dans un tiers central (Q) entre les essieux (12, 14).

7. Véhicule électrique selon l'une des revendications précédentes, **caractérisé en ce que**
- la batterie (22) comprend au moins deux ensembles de batterie, et
- l'axe de rotation (D₁₈) du moteur s'étend entre les ensembles de batterie.

8. Véhicule électrique selon l'une des revendications précédentes, **caractérisé par**
(a) un différentiel (20) et par
(b) une transmission (42) qui est disposée dans le flux du couple de rotation entre le moteur et le différentiel (20).

9. Véhicule électrique selon l'une des revendications précédentes, **caractérisé par**
(a) un second différentiel et par
(b) une transmission qui est disposée dans le flux du couple de rotation entre le moteur et le second différentiel.

10. Véhicule électrique selon l'une des revendications précédentes 1 ou 3 à 9, **caractérisé en ce que**
- le moteur électrique de type à induit intérieur comprend un arbre de rotor (40) à aimants permanents (64), et **en ce que**
- l'arbre de rotor (40) présente des rainures (50) qui s'étendent en direction longitudinale et dans lesquelles sont disposés les aimants permanents (64).

11. Véhicule électrique selon l'une des revendications précédentes, **caractérisé par**
- un second moteur électrique (18.2) qui est constitué par au moins deux modules (38.2) de second moteur électrique,
- les modules (38.2) du second moteur électrique présentant un second rotor (39.1) commun, et
- le premier rotor (39.1) et le second rotor (39.2) s'étendant parallèlement l'un à l'autre.

12. Véhicule électrique selon l'une des revendications précédentes, **caractérisé par**
(a) un second moteur électrique (18.2),
(b) un troisième moteur électrique (18.3) et
(c) un quatrième moteur électrique (18.4),
(d) chacun des moteurs électriques (18.1, 18.2, 18.3, 18.4) entraînant une roue respective (16.1, 16.2, 16.3, 16.4), en particulier par l'intermédiaire d'une transmission à renvoi d'angle.

13. Véhicule électrique selon l'une des revendications précédentes, **caractérisé en ce que** le centre de masse (S₁₈) du moteur électrique se situe dans un quart longitudinal central, en particulier dans un cinquième longitudinal central.

14. Véhicule électrique selon l'une des revendications précédentes 1 à 9 ou 11 à 13, **caractérisé en ce que**
(a) le moteur électrique (18) est de type à induit extérieur,
(b) un stator (66) du moteur électrique (18) comprend au moins un empilement de bobines (48), et
(c) un rotor (39) du moteur électrique (18) comprend une cloche de rotor (78) qui entoure l'empilement de bobines (48) radialement en forme de manchon.

15. Véhicule électrique selon la revendication 14, **caractérisé en ce que** la cloche de rotor (78) est en forme de T par référence à une section transversale en direction radiale.
